# EUROPÄISCHE PATENTSCHRIFT

(11) **EP 3 418 700 B1**
(45) Veröffentlichungstag und Bekanntmachung des Hinweises auf die Patenterteilung: **04.03.2026**
(21) Anmeldenummer: 18177701.2
(22) Anmeldetag: 14.06.2018
(51) Int. Cl.: G01F 23/284

(54) **FÜLLSTANDRADARGERÄT MIT AUTOMATISIERTER FREQUENZANPASSUNG**
FILL LEVEL RADAR APPARATUS WITH AUTOMATED FREQUENCY ADJUSTMENT
APPAREIL DE RADIODÉTECTION DE NIVEAU DE REMPLISSAGE À ADAPTATION AUTOMATIQUE DE LA FRÉQUENCE

(30) Priorität: 21.06.2017 DE 102017210402; 21.06.2017 DE 102017210383; 21.06.2017 DE 102017210381; 21.06.2017 DE 102017210382; 21.06.2017 EP 17177111; 21.06.2017 EP 17177147
(43) Veröffentlichungstag der Anmeldung: 26.12.2018
(73) Patentinhaber: VEGA Grieshaber KG, 77709 Wolfach (DE)
(72) Erfinder: WELLE, Roland, 77756 Hausach (DE); GRIESSBAUM, Karl, 77796 Mühlenbach (DE)
(74) Vertreter: Maiwald GmbH

(56) Entgegenhaltungen:
- EP-A2- 2 293 096
- EP-A2- 2 631 612
- DE-A1- 102009 057 191

## Beschreibung

### Gebiet der Erfindung

Die Erfindung betrifft die Füllstandmesstechnik. Insbesondere betrifft die Erfindung ein Füllstandradargerät, ein Verfahren zur Füllstandbestimmung, ein Programmelement und ein computerlesbares Medium.

### Hintergrund

Füllstandradargeräte bestimmen den Füllstand aus der Laufzeit elektromagnetischer Wellen, die vom Messgerät als Sendesignal ausgesendet und nach Reflexion am Füllgut wieder empfangen werden. Aus der Laufzeit der elektromagnetischen Wellen lässt sich ein Abstand zwischen dem Messgerät und dem Füllgut, und aus diesem wiederum ein Befüllungsgrad eines mit dem Messgerät ausgestatteten Behälters ermitteln.

Bei den elektromagnetischen Wellen kann es sich um Hochfrequenzwellen oder Mikrowellen handeln. Sie können vom Messgerät in Richtung Füllgut frei abgestrahlt werden oder, alternativ, von einem Wellenleiter hin- und zurückgeleitet werden.

Zur Messung der Laufzeit elektromagnetischer Wellen zwischen deren Aussendung und deren Empfang sind verschiedene Messverfahren bekannt. Grundsätzlich lassen sie sich unterscheiden in Verfahren, welche die Laufzeit sehr kurzer Sendepulse messen, meist als Puls-Radar bezeichnet, und Messprinzipien, welche auf der Modulation von kontinuierlich gesendeten Signalen beruhen. Diese Signale werden auch als Dauerstrichsignale bezeichnet und die entsprechenden Füllstandradargeräte beispielsweise als CW (Continuous Wave)-Radargeräte, welche während der Dauer eines Messvorgangs ständig senden, wodurch die Sendedauer im Gegensatz zum Puls-Verfahren innerhalb eines Messzyklus typischerweise um Größenordnungen länger ist als die Laufzeit der Signale selbst.

Durch die Modulation der Sende- und Empfangswellen lässt sich dabei die Laufzeit indirekt bestimmen. Beim FMCW-Verfahren (FMCW: Frequency Modulated Continuous Wave) wird hierzu eine lineare Frequenzmodulation verwendet, die auch als Frequenz-Sweep bezeichnet wird.

Das Signal-Rausch-Verhältnis des nach dessen Reflexion am Füllgut empfangenen Sendesignals kann unter bestimmten Voraussetzungen verbessert werden, indem die abgestrahlte Sendeleistung erhöht wird.

EP 2 631 612 A2 beschreibt ein Verfahren zur Überwachung und ein Verfahren zum Betreiben eines nach dem Radar-Prinzip arbeitenden Füllstandmesssystems, sowie ein entsprechendes Füllstandmesssystem, wobei das Messgerät ein Testsignal als Ausgangssignal erzeugt und wobei das Ausgangssignal und/oder ein davon abhängiges Signal derartig beeinflusst wird, dass das Abgriffssignal ein vorgebbares Einstellsignal ist.

EP 2 293 096 A2 beschreibt ein Verfahren und eine Vorrichtung zum Bereitstellen eines Reflexionssignals, wobei ein erstes Referenzsignal zur Demodulation eines Empfangssignals und zur Generierung eines Abtasttaktes oder zur Erzeugung eines zweiten Referenzsignals zur weiteren Demodulation des Empfangssignals dient.

### Zusammenfassung der Erfindung

Es ist eine Aufgabe der Erfindung, die Messgenauigkeit von Füllstandradargeräten weiter zu erhöhen.

Diese Aufgabe wird durch die Merkmale der unabhängigen Patentansprüche gelöst. Weiterbildungen der Erfindung ergeben sich aus den abhängigen Ansprüchen und der folgenden Beschreibung von Ausführungsformen.

Ein erster Aspekt der Erfindung betrifft ein Füllstandradargerät mit einer Signalquellenanordnung, die zum Erzeugen eines elektromagnetischen Sendesignals, dessen Dauer größer ist als die doppelte Laufzeit des Sendesignals von der Signalquellenanordnung zum Füllgut, eingerichtet ist. Bei dem elektromagnetischen Sendesignal kann es sich insbesondere um ein sogenanntes Dauerstrich-Sendesignal (CW-Signal) handeln. Es ist eine Betriebsparameter-Bestimmungseinrichtung vorgesehen, die eingerichtet ist zum Bestimmen eines neuen Sweep-Parameters des Dauerstrich-Sendesignals unter Berücksichtigung einer Benutzereingabe oder von vom Füllstandradargerät erfassten Informationen.

Darüber hinaus ist eine Betriebsparameter-Verstelleinrichtung vorgesehen, die ein separates Bauteil darstellen kann oder in der Betriebsparameter-Bestimmungseinrichtung integriert ist, und welche eingerichtet ist zum Verändern des Sweep-Parameters des Dauerstrich-Sendesignals auf den neuen Sweep-Parameter. Erfindungsgemäß kann der Sweep-Parameter während des normalen Messbetriebs des Füllstandmessgeräts geändert werden. Bei dem Sweep-Parameter handelt es sich beispielsweise um einen Parameter, der die Frequenzrampe des Sendesignals betrifft, beispielsweise die Sweep-Zeit des Dauerstrich-Sendesignals, dessen Bandbreite, dessen Startfrequenz oder Endfrequenz, die Anzahl an Frequenzzwischenschritten des Dauerstrich-Sendesignals oder dessen Leistung, die beispielsweise in Abhängigkeit von der Frequenz des Dauerstrich-Sendesignals eingestellt sein kann. Insbesondere kann die Sendeleistung des Sendesignals von der Frequenz des Sendesignals abhängig sein, also über das durchlaufende Frequenzband variieren.

Bei dem Sweep-Parameter des Dauerstrich-Sendesignals kann es sich aber auch um einen Parameter handeln, der mit dem eigentlichen Sweep nichts zu tun hat, beispielsweise die pro Frequenzschritt zu erfassende Anzahl an Abtastwerten oder die Abtastrate, welche für die Leistungsfähigkeit des Füllstandradargeräts bedeutsam sein können.

Insbesondere kann das Füllstandradargerät ausgeführt sein, mehrere dieser Sweep-Parameter während des Betriebs des Füllstandradargeräts zu verändern.

Diese Änderungen werden getriggert, indem von einem Benutzer eingegebene Informationen oder/und vom Füllstandradargerät erfasste Informationen von der Betriebsparameter-Bestimmungseinrichtung herangezogen werden, welche daraus die neuen Sweep-Parameter bestimmt. Bei diesen Informationen kann es sich insbesondere um eine oder mehrere Kenngrößen der Messumgebung oder des Messablaufs handeln. Beispiele hierfür sind Informationen darüber, um was für ein Füllgut es sich handelt (fest, flüssig etc.), um was für einen Messaufbau es sich handelt (offene Messumgebung oder Messung im Behälter, Standrohrmessung oder freistrahlende Messung, etc.), oder Informationen über eine zu erwartende Änderungsrate des Füllstandes oder zu erwartende Pegelunterschiede.

Gemäß einer weiteren Ausführungsform der Erfindung weist das Füllstandradargerät eine Sende- und Empfangsschaltung auf, welche eingerichtet ist, das Dauerstrich-Sendesignal in Richtung der Füllgutoberfläche auszusenden und das entsprechende reflektierte Sendesignal zu empfangen und dann mit einem weiteren Signal zur Bildung eines reflexionsabhängigen Empfangssignals zu mischen, aus welchem sich dann der Füllstand bestimmen lässt. In diesem Zusammenhang spricht man entweder von einer homodynen oder eine heterodynen Mischung, je nachdem, ob das empfangene Sendesignal mit "sich selbst" vermischt wird oder mit einem anderen Signal, das typischerweise auch eine andere Frequenz aufweist.

Gemäß einer weiteren Ausführungsform der Erfindung weist das Dauerstrich-Sendesignal eine abschnittsweise konstante Frequenz auf, wobei die einzelnen Frequenzen innerhalb eines definierten Frequenzbandes verteilt sind, beispielsweise äquidistant.

Gemäß einer Ausführungsform der Erfindung ist das Füllstandradargerät zum Anschluss an eine 4 bis 20 mA Zweileiterschleife ausgeführt, über welche das Füllstandradargerät mit der für die Messung erforderlichen Energie versorgt wird und über welche das Gerät Messdaten versendet und von einer externen Stelle Parametrierungsdaten empfangen kann.

Ein weiterer Aspekt der Erfindung betrifft ein Verfahren zur Füllstandbestimmung, bei dem ein elektromagnetisches Dauerstrich-Sendesignal erzeugt wird, dessen Dauer größer ist als die doppelte Laufzeit des Sendesignals von der Signalquelleanordnung zum Füllgut. Daraufhin wird ein neuer Sweep-Parameter des Dauerstrich-Sendesignals unter Berücksichtigung einer Benutzereingabe oder von vom Füllstandradargerät erfassten Informationen bestimmt und der Sweep-Parameter des Dauerstrich-Sendesignals auf den neuen Sweep-Parameter umgeändert.

Natürlich können auch mehrere Sweep-Parameter verändert werden.

Ein dritter Aspekt der Erfindung betrifft ein Programmelement, das, wenn es auf einem Prozessor eines Füllstandradargeräts ausgeführt wird, das Füllstandradargerät veranlasst, die oben und im Folgenden beschriebenen Schritte durchzuführen.

Ein weiterer Aspekt der Erfindung betrifft ein computerlesbares Medium, auf dem das oben beschriebene Programmelement gespeichert ist.

An dieser Stelle sei darauf hingewiesen, dass die oben und im Folgenden beschriebenen Merkmale des Füllstandradargeräts auch als Verfahrensschritte implementiert sein können und dass die im Rahmen der Erfindung beschriebenen verfahrensmäßige Merkmale auch im Füllstandradargerät implementiert sein können.

Ein Grundgedanke der Erfindung kann darin gesehen werden, dass die von einem Füllstandradargerät abgestrahlten Sendefrequenzen optimiert werden, um beispielsweise die Messgenauigkeit zu erhöhen. Durch vorab einprogrammiertes Wissen kann die Betriebsparameter-Bestimmungseinrichtung in dem Füllstandradargerät, das nach dem kontinuierlich oder schrittweise modulierten FMCW-Verfahren oder dem Reflektometerprinzip arbeitet, in die Lage versetzt werden, unter Berücksichtigung der vom Benutzer eingegebenen Anwendungsparameter und/oder selbst erlernter Kenngrößen der Messanwendung die charakteristischen Kenngrößen (Sweep-Parameter) des zur Messung verwendeten Sendesignals zu optimieren.

Im Folgenden werden mit Verweis auf die Figuren Ausführungsformen der Erfindung beschrieben. Werden in den Figuren die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt ein Schaltbild eines Füllstandradargeräts.
Fig. 2 zeigt Beispiele für Sendesignale und die entsprechenden reflexionsabhängigen Empfangssignale.
Fig. 3 zeigt ein Schaltbild eines weiteren Füllstandradargeräts.
Fig. 4 zeigt ein Beispiel für charakteristische Kenngrößen eines ersten Betriebsmodus eines Reflektometerverfahrens.
Fig. 5 zeigt ein Schaltbild eines weiteren Füllstandradargeräts.
Fig. 6 zeigt ein Schaltbild eines weiteren Füllstandradargeräts.
Fig. 7 zeigt die Wirkungsweise beim Verändern der charakteristischen Kenngrößen.
Fig. 8 zeigt Zusammenhänge zwischen typischen Kenngrößen einer Messanordnung und den charakteristischen Kenngrößen des Messablaufs des Füllstandradargeräts.
Fig. 9 zeigt ein weiteres Beispiel.
Fig. 10 zeigt ein weiteres Beispiel.
Fig. 11 zeigt ein weiteres Beispiel.
Fig. 12 zeigt ein weiteres Beispiel.
Fig. 13 zeigt ein weiteres Beispiel.
Fig. 14 zeigt ein weiteres Beispiel.
Fig. 15 zeigt ein Flussdiagramm eines Verfahrens gemäß einer Ausführungsform der Erfindung.

### Detaillierte Beschreibung von Ausführungsformen

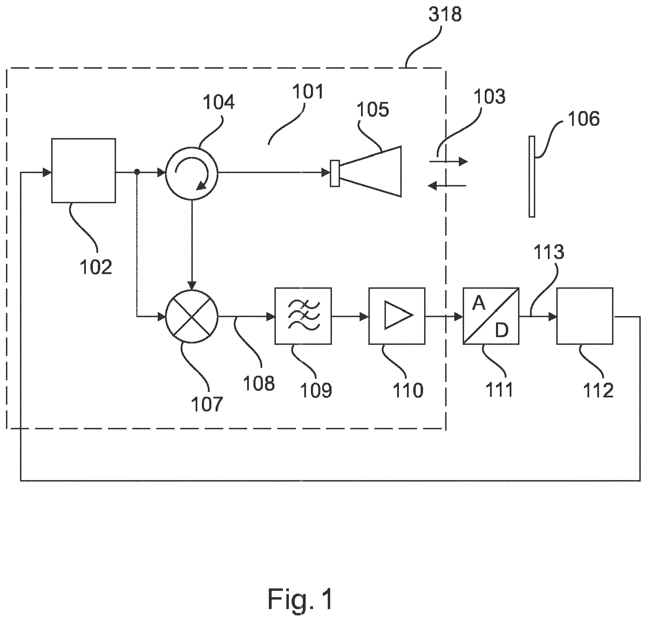

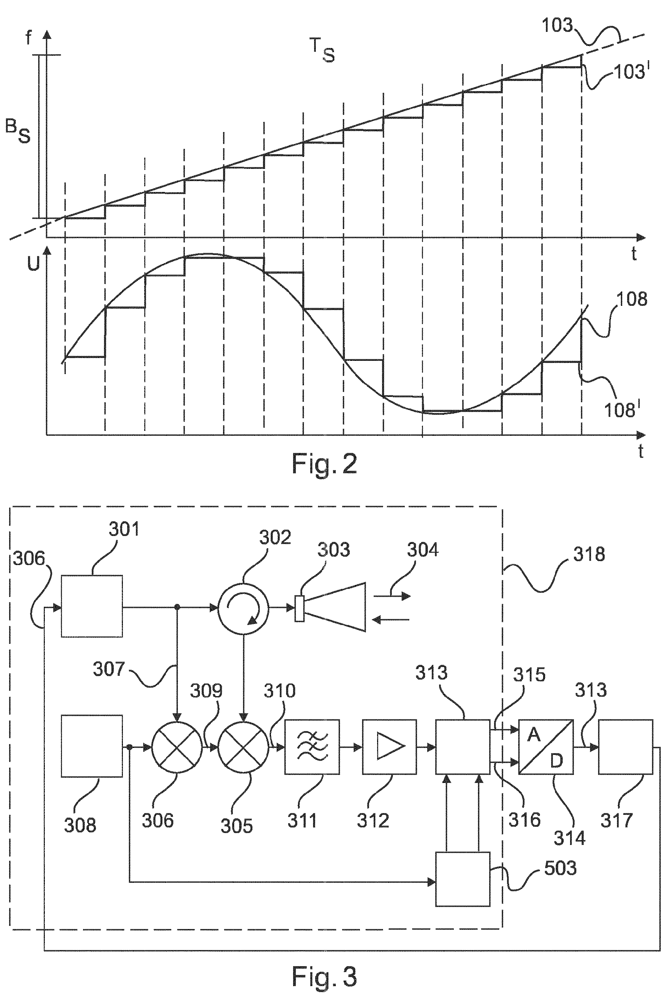

Fig. 1 zeigt in Form eines stark vereinfachten Blockschaltbilds den grundsätzlichen Aufbau einer Sende-Empfangsschaltung 101 eines FMCW-Radarsensors. Der Synthesizer 102 dient zur Erzeugung des Sendesignals 103 und enthält hierzu beispielsweise einen VCO (voltage controlled oscillator). Über eine im Synthesizer 102 enthaltene Schaltung zur Kontrolle der Sendefrequenz, beispielsweise eine PLL-Schaltung (phase locked loop), wird das Sendesignal linear frequenzmoduliert. Dieses Sendesignal 103 gelangt über den Zirkulator 104 zur Antenne 105 und wird von dieser in Richtung Reflektor 106 gesendet. Das nach der Reflexion zur Antenne 105 zurückkehrende Empfangssignal gelangt über den Zirkulator 104 zum Mischer 107. Dieser mischt das Empfangssignal mit einem Teil des Sendesignals, wodurch ein sogenanntes Beatsignal 108 entsteht. Dieses wird nach Tiefpassfilterung im Filter 109 und entsprechender Verstärkung im Verstärker 110 von einem Analog-DigitalWandler 111 digitalisiert und danach digital weiterverarbeitet. Durch die Mischung von Sende- und Empfangssignal handelt es sich hier um ein sogenanntes homodynes Empfängerprinzip. Die Entfernung des Reflektors 106 vom Messgerät wirkt sich direkt auf die Frequenz des Beatsignals 108 aus, weshalb umgekehrt aus der gemessenen Beatfrequenz direkt auf die Messentfernung geschlossen werden kann. Bei mehreren Reflektoren entsteht ein Beatsignal 108 mit einem Frequenzgemisch aus den den verschiedenen Messentfernungen zugehörigen Einzelfrequenzen. Es ist daher üblich, das digitalisierte Beatsignal innerhalb einer Controllerschaltung 112 einer Spektralanalyse zu unterziehen, beispielsweise mit Hilfe einer Fouriertransformation oder einer schnellen Fouriertransformation FFT (fast fourier transformation), um die einzelnen Frequenzanteile bzw. Reflexionsanteile zu separieren und gegebenenfalls hinsichtlich ihrer Frequenz und damit der zugrundeliegenden Messentfernung genau zu bestimmen. Fig. 2 zeigt einen Ausschnitt des Sendesignals 103 mit der linearen Frequenzmodulation in einem Zeit-Frequenz-Diagramm und direkt darunter in einem Zeit-Spannungs-Diagramm beispielhaft ein zugehöriges analoges Beatsignal 108, welches bei einer definierten Reflektorentfernung entsteht.

Eine bekannte Variante des FMCW-Verfahrens ist die Abwandlung der linearen Frequenzmodulation des Sendesignals in eine gestuft lineare Frequenzmodulation, wie sie in Fig. 2 als Alternative 103' dargestellt ist. Dabei verharrt das Sendesignal 103' für eine gewisse Zeitdauer auf einer bestimmten Frequenz und springt danach in gleichmäßigen Schritten weiter auf die nächsten Frequenzen. Durch die homodyne Mischung entsprechend dem auch hier gültigen Blockschaltbild aus Fig. 1 entsteht am Mischerausgang eine aus der gegenseitigen Phasenverschiebung von Sende- und Empfangssignal resultierende Gleichspannung für jede Frequenzstufe. Die aus jeder Stufe resultierenden Gleichspannungen ergeben hintereinander gesetzt einen der Beatfrequenz 108 des vorher beschriebenen FMCW-Verfahrens gemäßen Signalverlauf 108'. Dies ist in Fig. 2 ebenfalls ausschnittsweise skizziert. Wie aus der Abbildung deutlich wird wandelt sich das zuvor kontinuierliche Beatsignal 108 in ein gestuftes Analogsignal 108'. Bei einer anschließenden Analog-DigitalWandlung dieses gestuften Signals 108' bietet sich natürlich an, pro Stufe genau einen Abtastwert zu wandeln, womit das digitalisierte Beatsignal der gestuften linearen Frequenzmodulation sich nicht wesentlich vom digitalisierten Beatsignal eines Standard-FMCW-Verfahrens unterscheidet. Deshalb ist die weitere digitale Signalverarbeitung, beginnend mit der Spektralanalyse, bei beiden Verfahren identisch.

Charakteristische Kenngrößen beim Betrieb eines Radarmessgerätes nach dem FMCW-Verfahren (auch Betriebsparameter genannt) sind die während eines Frequenzsweeps durchlaufene Bandbreite B_{S} sowie die dafür benötigte Sweepzeit T_{S}. Weiterhin kann die Festlegung der Abtastfrequenz f_{A} des A/D-Wandlers 111 für die Leistungsfähigkeit des Radarsystems bedeutsam sein. Allgemein kann durch eine Erhöhung der Bandbreite B_{S} die Unterscheidung sehr eng beieinanderliegender Echos verbessert werden. Eine Erhöhung der Sweepzeit T_{S} führt zu einer Verbesserung des Signal-Rausch-Abstandes und durch eine Erhöhung der Abtastrate f_{A} des A/D-Wandlers kann eine Vergrößerung des maximal erfassbaren Messbereiches erreicht werden.

Fig. 3 zeigt ein Blockschaltbild eines zu oben beschriebenen, bekannten FMCW-Verfahren alternativen Messverfahrens, welches im Folgenden auch als Reflektometerverfahren bezeichnet ist. Es unterscheidet sich zu der in Fig. 1 dargestellten Sende-Empfangsschaltung 101 unter anderem durch eine heterodyne Schaltungsausführung, die eine Empfangsmischung des empfangenen Signals mit einem Lokaloszillatorsignal unterschiedlicher Frequenz vorsieht, so dass am Mischerausgang eine Zwischenfrequenz entsteht. Ebenso wie in Fig. 1 wird vom Synthesizer 301 ein Sendesignal erzeugt, welches über den Zirkulator 302 oder Richtkoppler 302 zur Antenne 303 geleitet und von dieser abgestrahlt wird. Die Antenne 303 wandelt dabei ein über eine Leitung zugeführtes Hochfrequenzsignal in eine elektromagnetische Welle 304, welche entweder frei abgestrahlt oder alternativ über einen Wellenleiter, beispielsweise einen Hohlleiter oder einen Eindraht- oder Mehrdrahtleiter, in Richtung Reflektor geführt wird. Die am Reflektor reflektierte Welle gelangt wenigstens teilweise wieder zurück zur Antenne 303 und wird zurück in ein leitungsgeführtes Empfangssignal gewandelt. Dieses gelangt über den Zirkulator 302 oder Richtkoppler 302 nun zum Empfangsmischer 305. Der Zirkulator oder Richtkoppler 302 ist ein im Bereich der Radar-Füllstandmessung bekanntes Bauteil, welches bei monostatischem Betrieb, also bei Verwendung der gleichen Antenne zum Senden und Empfangen, vorteilhaft einsetzbar ist. Er besitzt mindestens 3 Ports und leitet richtungsselektiv Signale von einem Port vorwiegend zu einem zweiten Port, während der dritte Port hierbei entkoppelt ist. Bei einem ebenfalls möglichen, hier nicht näher gezeigten bistatischen Betrieb werden zum Senden und Empfangen zwei separate Antennen verwendet. Dabei entfällt der Zirkulator oder Richtkoppler 302 und das Signal gelangt einerseits vom Synthesizer 301 zur Sendeantenne und andererseits von der Empfangsantenne zum Empfangsmischer 305.

Der Synthesizer 301 dient zur Erzeugung von verschiedenen Sinusschwingungen verschiedener Frequenz in einem zuvor festgelegten Frequenzband, wobei die Frequenz für eine gewisse Zeitdauer auf einem festen Wert verharrt und danach auf einen neuen festen Frequenzwert springt. Dies kann beispielsweise in Form einer gestuft linearen Frequenzmodulation stattfinden. Dazu enthält er einen abstimmbaren Oszillator, beispielsweise einen VCO. Außerdem enthält er in vorteilhafter Weise eine Regelschleife und einen Referenzoszillator. Die Regelschleife, beispielsweise eine Phasenregelschleife PLL (phase-locked loop), regelt die Frequenz des abstimmbaren Oszillators so, dass sie in einem bestimmten, einstellbaren Verhältnis zur Frequenz des Referenzoszillators steht. Die Einstellung des Frequenzverhältnisses geschieht vorteilhaft digital, beispielsweise gesteuert durch eine Controllerschaltung 317 über das Signal 306, und bedeutet meist die Umschaltung eines oder mehrerer Teilerbausteine, welche die Frequenz von Referenzoszillator und / oder des abstimmbaren Oszillators herunterteilen. Dabei sind neben einfachen ganzzahligen Teilern auch nicht ganzzahlige Teiler, sogenannte fractional N-Teiler, möglich. Durch die Verwendung solcher Teiler ist es möglich, die Ausgangsfrequenz des Synthesizers 301 in sehr feinen Schritten über einen relativ großen Frequenzbereich zu verstellen.

Ein Teil des Ausgangssignals des Synthesizers 301 wird abgezweigt, beispielsweise über einen nicht näher gezeigten Power-Splitter oder einen Koppler, um das Lokaloszillatorsignal für den Empfangsmischer 305 zu bilden. Dazu wird über den Mischer 306 das abgezweigte Synthesizersignal 307 mit einem Ausgangssignal eines Oszillators 308 gemischt, wodurch verschiedene neue Frequenzanteile wie die Summenfrequenz und die Differenzfrequenz aus den beiden Eingangsfrequenzen entstehen.

Das Ausgangssignal des Mischers 306 dient als Lokaloszillatorsignal zur heterodynen Empfangsmischung im Empfangsmischer 305.

Im Empfangsmischer 305 entsteht aus Lokaloszillatorsignal und Empfangssignal unter anderem die Differenzfrequenz der beiden Signale. Dieses als Zwischenfrequenzsignal 310 bezeichnete Ausgangssignal des Empfangsmischers 305 besitzt neben der eben erwähnten festen Frequenz eine Phasenlage, die zusammen mit der Amplitude des Zwischenfrequenzsignals eine komplexe Kenngröße des Reflexionskoeffizienten aller an der Reflexion der Welle beteiligter Reflektoren definiert. Oder mit anderen Worten ausgedrückt ist die Phasenlage des Zwischenfrequenzsignals von der gegenseitigen Phasenlage von Lokaloszillatorsignal und Empfangssignal abhängig. Die Phasenlage des Empfangssignals seinerseits hängt ab von der zurückgelegten Strecke der gesendeten bzw. empfangenen Welle und damit von der Reflektorentfernung, während die Phasenlage des Lokaloszillatorsignals vom Synthesizer-Ausgangssignal und damit dem gesendeten Signal abhängt. Somit ist die Phasenlage des Zwischenfrequenzsignals letztlich nur abhängig von der Phasenverschiebung zwischen Sendesignal und Empfangssignal und damit von der Reflektorentfernung. Im Bandfilter 311 wird dieses Zwischenfrequenzsignal bandgefiltert und im Zwischenfrequenzverstärker 312 verstärkt, um den Signal-Rausch-Abstand zu erhöhen. Um den komplexen Reflexionskoeffizienten aus dem analog vorliegenden Zwischenfrequenzsignal zu bestimmen, kann durch Verwendung eines Quadraturdemodulators 313 das Zwischenfrequenzsignal in seine komplexen Bestandteile, also den Real- und den Imaginärteil, zerlegt und danach beide Anteile getrennt analog-digital gewandelt werden. Vorteilhaft an der Verwendung des Quadraturdemodulators ist, dass Real- und Imaginärteil des Zwischenfrequenzsignals als Basisbandsignale 315, 316 vorliegen, d.h. keine hohen Frequenzanteile mehr enthalten und damit sehr einfach zu digitalisieren sind.

Wie bereits angedeutet erfolgt nach der Analog-Digitalwandlung durch den Analog-Digital-Wandler 314 die Weiterverarbeitung der Messwerte innerhalb der Controllerschaltung 317. Der Schaltungsteil 317 enthält neben Programmcode zur Auswertung der digitalisierten Messsignale insbesondere auch Programmcode zur Ablaufsteuerung eines Messzyklus, d.h. zur Initiierung der Aussendung der Wellen und der Steuerung der Frequenzen sowie der allgemeinen Steuerung der Sende-Empfangsschaltung 318.

Die in Fig. 3 gezeigte Schaltungsanordnung erlaubt wie beschrieben die Bestimmung eines komplexen Reflexionskoeffizienten. Dieser komplexe Reflexionskoeffizient setzt sich zusammen aus allen Reflexionsanteilen, die im empfangenen Signal enthalten sind. Sind mehrere Reflektoren daran beteiligt, so sind die einzelnen Signalanteile nicht mehr separierbar und eine Bestimmung der Distanz der einzelnen Reflektoren nicht möglich. Wiederholt man diese Messung auf weiteren eingestellten Ausgangsfrequenzen innerhalb eines bestimmten Frequenzbandes, lässt sich aber eine digitale Wertetabelle bestehend aus den eingestellten Frequenzwerten und den zugehörigen komplexen Reflexionskoeffizienten erstellen. In vorteilhafter Weise werden dabei die Frequenzabstände aller Frequenzwerte gleich gewählt, so dass die Frequenzwerte das Frequenzband in äquidistante Abschnitte unterteilen. Das damit erzeugte bandbegrenzte Spektrum der digitalen Reflexionskoeffizienten wird anschließend innerhalb einer Controllerschaltung 317 einer inversen Fouriertransformation, beispielsweise bei äquidistanten Frequenzabständen einer IFFT (inverse fast fourier transformation), unterzogen, die das Frequenzsignal in ein Zeitsignal transformiert. Dieses digitale Zeitsignal wiederum ist charakteristisch für die Summe der Reflexionen des ausgesandten und wieder empfangenen Messsignals. Es liegt in Form einer Wertetabelle von Zeitwerten und zugehörigen Reflexionsanteilen vor und kann hinsichtlich einer Ermittlung von lokalen Maxima ausgewertet werden. Diese lokalen Maxima kennzeichnen die einzelnen Reflexionen der verschiedenen Reflektoren, die nach der zugeordneten Zeit empfangen wurden. In dieser Form gleicht nun diese Zeit-Reflexionsamplitude-Wertetabelle den aus den bekannten Füllstandradarverfahren geläufigen digitalisierten Reflexionsprofilen. Weitere Auswerteschritte zur Bestimmung des gesuchten Echos der Füllgutoberfläche und die Bestimmung des exakten Reflexionszeitpunkts dieses Echos können deshalb aus den bekannten Methoden der Puls-Radar- oder FMCW-Radarsysteme übernommen werden.

Charakteristische Kenngrößen beim Betrieb eines Radarmessgerätes nach dem Reflektometerverfahren sind die sich aus der Differenz der maximal abgestrahlten Frequenz zu der minimal abgestrahlten Frequenz ergebende Bandbreite B_{S} sowie die Anzahl an Frequenzzwischenschritten N_{FS}. Weiterhin kann die Festlegung der pro Frequenzschritt zu erfassenden Anzahl an Abtastwerten N_{S} für die Leistungsfähigkeit des Radarsystems bedeutsam sein.

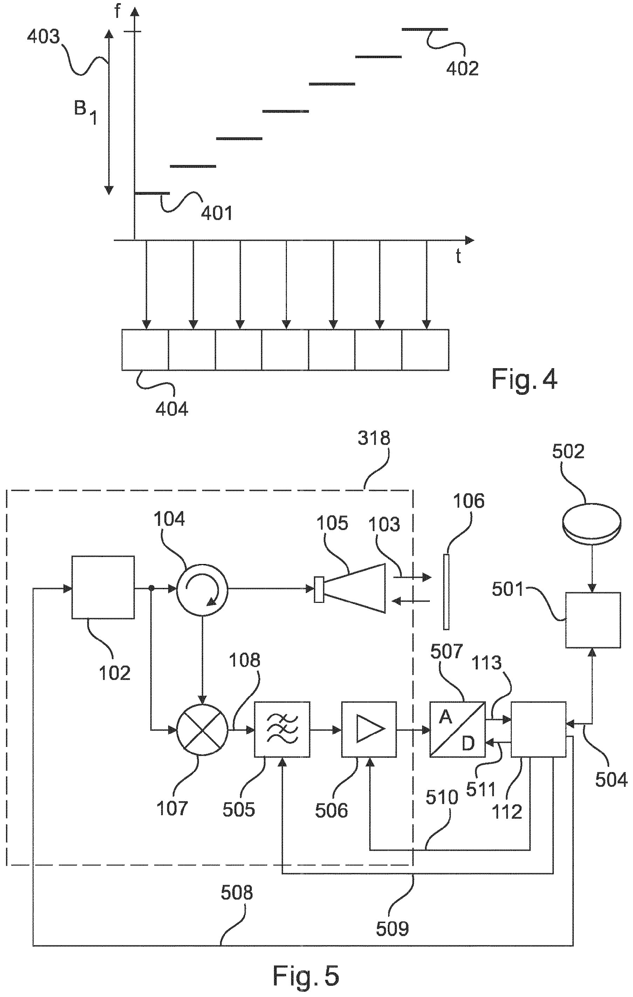

Figur 4 zeigt die charakteristischen Kenngrößen eines ersten Betriebsmodus eines Reflektometerverfahrens. Die Messung beginnt bei einer ersten Frequenz 401 und endet bei einer zweiten Frequenz 402. Aus der Differenz dieser beiden Frequenzen ergibt sich die Bandbreite B₁ 403 des Systems. Je größer diese Bandbreite gewählt wird, umso schmäler werden die Echos innerhalb einer Echokurve abgebildet, was dazu beiträgt, dass sehr eng beieinanderliegende Echos noch getrennt ausgewertet werden können. Ein weiterer Parameter des Ablaufs gemäß Figur 4 ist die Anzahl an Frequenzstufen N_{FS}, welche im vorliegenden Beispiel mit sieben festgelegt wurde. Je höher die Anzahl an Frequenzstufen innerhalb der Bandbreite B₁ festgelegt wird, desto größer ist der Messbereich des Systems, innerhalb welchem eine eindeutige Abbildung der Reflexionsverhältnisse sichergestellt ist. Weiterhin wird durch die Anzahl an Analog-Digitalwandlungen pro Frequenzschritt die Empfindlichkeit des Messsystems beeinflusst. Durch eine Erfassung vieler Einzelmesswerte pro Frequenzschritt kann eine Erhöhung des Signal-Rausch-Verhältnisses innerhalb der digitalen Signalverarbeitung erreicht werden. Im vorliegenden Beispiel der Figur 4 wird genau ein Abtastwert 404 pro Frequenzschritt erfasst.

Die Betriebsparameter können bei der Füllstandmessung mit kontinuierlich oder schrittweise modulierten FMCW oder Reflektometer - Messgeräten verändert werden. Hierfür ist im Allgemeinen spezialisiertes Expertenwissen notwendig, da es einem Fachfremden nicht ersichtlich ist, welche der zuvor aufgeführten charakteristischen Kenngrößen innerhalb welcher Grenzen verändert werden können und welche spezifischen Auswirkungen auf die Messung sich aus der Veränderung der Parameter ergeben.

Die Betriebsparameter-Verstelleinrichtung ist eingerichtet, es dem fachfremden Benutzer zu ermöglichen, den Betrieb eines Füllstandmessgerätes nach einem kontinuierlich oder schrittweise modulierten FMCW Verfahren oder Reflektometerprinzip zu optimieren. Darüber hinaus wird eine Weiterbildung der Parameterverstelleinrichtung vorgeschlagen, welche geeignet ist, während des Betriebes des Füllstandmessgerätes ohne Eingriff von außen die Betriebsparameter im Kontext der Messung selbständig zu verändern und zu optimieren.

Fig. 5 zeigt ein erstes Ausführungsbeispiel eines modifizierten Radargerätes nach dem FMCW-Verfahren. Das in wesentlichen Teilen der bekannten Anordnung aus Figur 1 entsprechende Messgerät besitzt eine Parameterverstelleinrichtung 501, welche vom Benutzer eingegebene Benutzerparameter in Vorgaben für die charakteristischen Kenngrößen des Messablaufs umsetzen kann. Die Parameterverstelleinrichtung kann ausgeführt sein, auch die Funktion einer Betriebsparameter-Bestimmungseinrichtung zu übernehmen. Der Benutzer kann hierbei über eine Interfaceeinheit 502, welche nicht notwendigerweise Teil des Messgerätes selbst ist, und welche drahtgebunden oder auch drahtlos mit der Parameterverstelleinrichtung kommuniziert, typische Kenngrößen einer Messstelle eingeben. Diese Kenngrößen sollen im Kontext der vorliegenden Schrift auch als Benutzerparameter bezeichnet werden. Als Interfaceeinheit kommen neben klassischen Bedienmodulen auch PC-Anwendungsprogramme, Smartphone-Apps oder auch bekannte Bedienmodule aus der Prozessautomation (z.B. HART-Handhelds) in Betracht. Die typischen Kenngrößen einer Messstelle umschreiben Informationen zu den Fragestellungen ob beispielsweise ein Schüttgut oder eine Flüssigkeit gemessen wird, ob eher gut reflektierendes Material oder schlecht reflektierendes Material gemessen wird, ob schnelle Füllstandänderungen zu erwarten sind, ob eine Messung innerhalb eines Standrohrs gemacht wird, ob an einer offenen Messstelle ohne Behälter gemessen wird, ob im Rahmen der Messung gesättigte Dampfatmosphären zu erwarten sind, und/oder wie groß der maximal zu erwartende Entfernungsbereich zum Medium sein wird. Die Parameterverstelleinrichtung 501 verarbeitet die vom Benutzer über eine Interfaceeinheit 502 eingegebenen Benutzerparameter, und leitet aus diesen nach einem Regelwerk charakteristische Kenngrößen zum Betrieb des Radarmessgerätes nach dem FMCW-Verfahren ab, beispielsweise die zur Messung verwendete Startfrequenz, die Messdauer, die Bandbreite als Differenz zwischen Stopp- und Startfrequenz, die Anzahl zu erfassender Messwerte und andere durch die Sensorelektronik einstellbaren Messparameter. Die Parameterverstelleinrichtung 501 kann als separate Elektronikeinheit innerhalb des Sensors realisiert sein, beispielsweise als Logikschaltung, als FPGA, oder aber auch als Mikrocontroller mit entsprechender Betriebssoftware. Es kann aber auch vorgesehen sein, dass die Parameterverstelleinrichtung 501 als reine Softwareimplementierung auf der ehedem schon vorhandenen Controllerschaltung 112, 317 umgesetzt wird. Es kann auch vorgesehen sein, die Parameterverstelleinrichtung 501 innerhalb der Interfaceeinheit 502 als Hardware, Software oder kombinierte Implementierung vorzusehen. Die von der Parameterverstelleinrichtung 501 im Kontext der vom Benutzer eingegebenen Benutzerparameter für die jeweilige Messsituation ermittelten, optimierten charakteristischen Kenngrößen zum Betrieb werden der Controllerschaltung 112, 317 übermittelt, beispielsweise über eine Kommunikationsleitung 504. Die Controllerschaltung 112, 317 ist mit Hilfe der Verbindungen 508, 509, 510, 511 in der Lage, direkten Einfluss auf den Ablauf einer Messung zu nehmen, also insbesondere den Synthesizer 102, ein verstellbares Analogfilter 505, einen einstellbaren Verstärker 506 und/oder den Analog-DigitalWandler 507 derart einzustellen und anzusteuern, dass die Vorgaben der Parameterverstelleinrichtung 501 für die charakteristischen Kenngrößen des Radarmessgerätes hinreichend eingehalten werden.

Es sei an dieser Stelle darauf hingewiesen, dass die Kommunikationsleitung 504 zur bidirektionalen Kommunikation ausgelegt ist. Im weiteren Verlauf der vorliegenden Schrift wird insbesondere darauf eingegangen werden, dass die Parameterverstelleinrichtung ergänzend oder ausschließlich auch Informationen der aktuellen Messung selbst zur Ermittlung der Vorgaben für die charakteristischen Kenngrößen zum Betrieb des Radarmessgerätes verwenden kann.

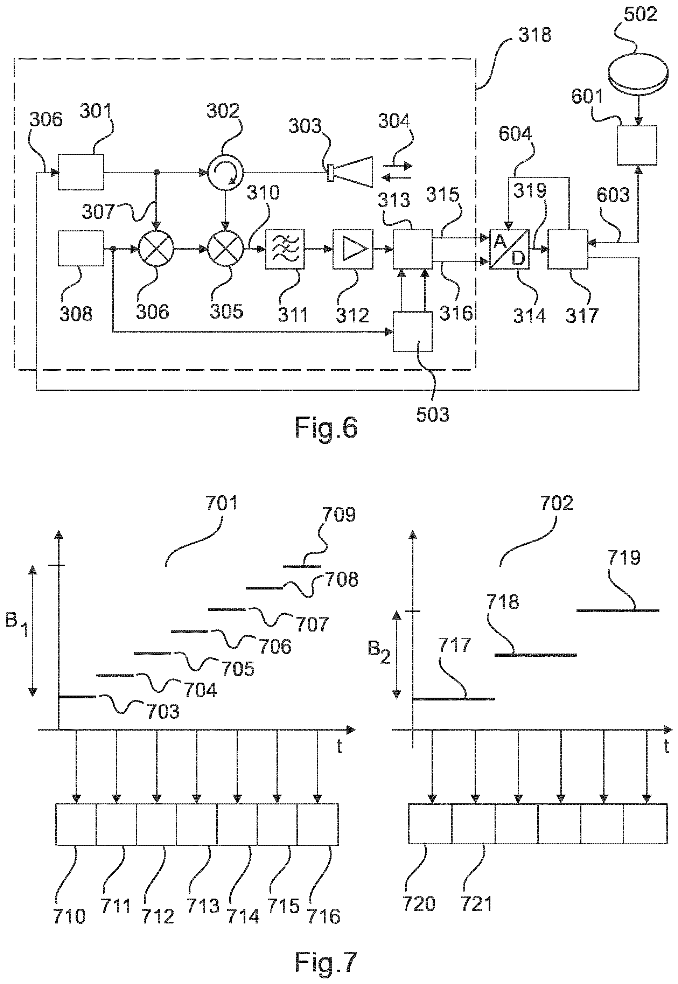

Figur 6 zeigt ein zweites Ausführungsbeispiel eines modifizierten Radargerätes nach dem Reflektometerprinzip. Das in wesentlichen Teilen der bekannten Anordnung aus Figur 3 entsprechende Messgerät besitzt eine Parameterverstelleinrichtung 601, welche vom Benutzer eingegebene Benutzerparameter in Vorgaben für die charakteristischen Kenngrößen des Messablaufs des Reflektometers umsetzen kann. Der Benutzer kann hierbei über eine Interfaceeinheit 502, welche nicht notwendigerweise Teil des Messgerätes selbst ist, und welche drahtgebunden oder auch drahtlos mit der Parameterverstelleinrichtung kommuniziert, typische Kenngrößen einer Messstelle eingeben. Die Parameterverstelleinrichtung 601 verarbeitet die vom Benutzer über eine Interfaceeinheit 502 eingegebenen Benutzerparameter, und leitet aus diesen nach dem Regelwerk charakteristische Kenngrößen zum Betrieb des Radarmessgerätes nach dem Reflektometerverfahren ab, beispielsweise die zur Messung anzusteuernden Einzelfrequenzwerte, die Bandbreite als Differenz zwischen der höchsten Messfrequenz und der niedrigsten Messfrequenz, die Anzahl der pro Messfrequenz zu erfassenden Abtastwerte. Die Parameterverstelleinrichtung 601 kann als separate Elektronikeinheit innerhalb des Sensors realisiert sein, beispielsweise als Logikschaltung, als FPGA, oder aber auch als Mikrocontroller mit entsprechender Betriebssoftware. Es kann aber auch vorgesehen sein, dass die Parameterverstelleinrichtung 601 als reine Softwareimplementierung auf der ehedem schon vorhandenen Controllerschaltung 317, umgesetzt wird. Es kann auch vorgesehen sein, die Parameterverstelleinrichtung 601 innerhalb der Interfaceeinheit 502 als Hardware, Software oder kombinierte Implementierung vorzusehen.

Die von der Parameterverstelleinrichtung 601 im Kontext der vom Benutzer eingegebenen Benutzerparameter für die jeweilige Messsituation ermittelten, optimierten charakteristischen Kenngrößen zum Betrieb werden der Controllerschaltung 317 übermittelt, beispielsweise über eine Kommunikationsleitung 603. Die Controllerschaltung 317 ist mit Hilfe der Verbindungsleitungen 306, 604 in der Lage, direkten Einfluss auf den Ablauf einer Messung zu nehmen, also insbesondere den Synthesizer 301 und/oder den Analog-Digital-Wandler 314 derart einzustellen und anzusteuern, dass die Vorgaben der Parameterverstelleinrichtung 601 für die charakteristischen Kenngrößen des Radarmessgerätes hinreichend eingehalten werden.

Es sei an dieser Stelle darauf hingewiesen, dass die Kommunikationsleitung 603 zur bidirektionalen Kommunikation ausgelegt ist. Im weiteren Verlauf der vorliegenden Schrift wird insbesondere darauf eingegangen werden, dass die Parameterverstelleinrichtung ergänzend oder ausschließlich auch Informationen der aktuellen Messung selbst zur Ermittlung der Vorgaben für die charakteristischen Kenngrößen zum Betrieb des Radarmessgerätes verwenden kann.

Figur 7 zeigt anhand eines Füllstandmessgerätes nach dem Reflektometerprinzip die Wirkungsweise beim Verändern der charakteristischen Kenngrößen zum Betrieb des Gerätes. Ohne die Eingabe typischer Kenngrößen der Messstelle durch den Benutzer mag sich das Messgerät in einem Auslieferungszustand befinden, innerhalb welchem es sieben verschiedene Einzelfrequenzwerte 703 ... 709 mit Hilfe eines Synthesizers 301 erzeugt. Die sich aus dieser Messung ergebende Hochfrequenzbandbreite B1 ergibt sich aus der Differenz zwischen der höchsten gesendeten Frequenz 709 und der niedrigsten gesendeten Frequenz 703. Das Messgerät mag in der Werkseinstellung so programmiert sein, dass es für jeden der zeitlich nacheinander eingestellten Einzelfrequenzwerte 703 ... 709 genau einen komplexwertigen Messwert 710, 711, ..., 716 mit Hilfe des Analog-Digital-Wandlers 314 erfasst. Aus den erfassten Messwerten 710 ... 716 kann auf bekannte Weise die Entfernung zum Füllgut bestimmt werden.

Wird vom Benutzer im Rahmen einer Parametrierung des Messgerätes beispielsweise die Information zur Verfügung gestellt, dass die Messung innerhalb eines Behälters mit einem schlecht reflektierenden Schüttgutmaterial stattfinden soll, so wird diese Information von der Parameterverstelleinrichtung 601 dazu verwendet, die charakteristischen Kenngrößen zum Betrieb entsprechend der Darstellung 702 zu verändern. Bei Schüttgutanwendungen gilt allgemein, dass die Echos der Schüttgutoberfläche bedingt durch sich ausbildende Schüttkegel sehr breit werden. Es ist daher naheliegend, den Messablauf derart zu verändern, dass eine geringere Bandbreite B2 durchlaufen wird. Dies führt zwar ebenfalls zu breiteren Echos, jedoch kann der Energieverbrauch und damit die Messwiederholrate durch eine solche Maßnahme optimiert werden. Darüber hinaus wird die Information zur schlechten Reflektivität des Mediums genutzt, indem pro abgesendeter Frequenzstufe 717, 718, 719 mehrere Messwerte 720, 721 erfasst werden. Durch eine Mittelwertberechnung der zu einer Frequenzstufe gehörenden Messwerte innerhalb der Controllerschaltung 317 kann der Rauschanteil innerhalb der erfassten Messwerte reduziert und somit die Messsicherheit bei schlecht reflektierenden Medien verbessert werden.

In den weiteren Figuren werden weitere Beispielzusammenhänge, welche als a priori Wissen innerhalb der Parameterverstelleinrichtung 501, 601 abgelegt werden, verdeutlicht. Um die Komplexität der Darstellung nicht zu sehr anwachsen zu lassen, beschränken sich die Ausführungen auf das FMCW-Prinzip. Es sei an dieser Stelle nachdrücklich darauf hingewiesen, dass es dem Fachmann ohne Probleme möglich ist, die entsprechenden Erkenntnisse auch auf eine Parameterverstelleinrichtung für ein Radarmessgerät nach dem Reflektometerprinzip zu übertragen. Ein erstes Beispiel wurde in Figur 7 dargelegt.

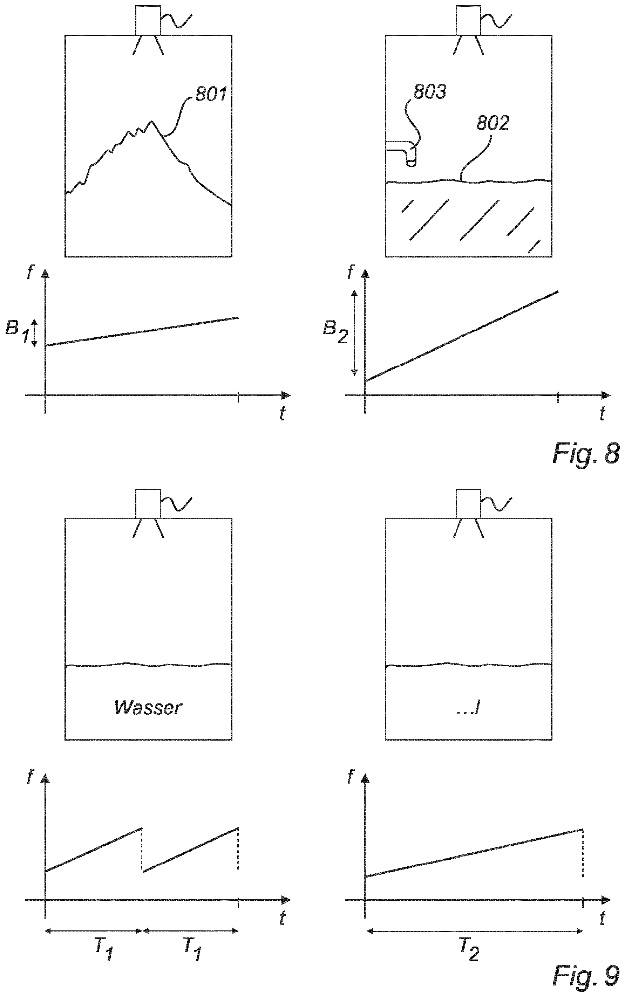

Die folgenden Ausführungen zu den Figuren 8 bis 14 zeigen beispielhafte Zusammenhänge zwischen den typischen Kenngrößen einer Messstelle und den charakteristischen Kenngrößen des Messablaufes des Radarmessgerätes. Figur 8 zeigt die Veränderung bei der Auswahl zwischen einer Messung auf Schüttgut 801 und einer Messung auf Flüssigkeiten 802, wie sie vom Benutzer über eine Benutzerschnittstelle 502 eingegeben werden kann. Bei der Messung auf Schüttgut werden im Allgemeinen physikalisch bedingt sehr breite Schüttkegelechos gemessen werden. Eine Trennung sehr nahe beieinanderliegender Echos wird daher nicht sehr sinnvoll sein. Es ist daher vorteilhaft, die Messbandbreite B1 sehr klein zu wählen. Im Gegensatz dazu soll bei Flüssigkeitsanwendungen mit der Einstellung einer sehr großen Messbandbreite B2 erreicht werden, dass das Messgerät sehr schmale Echos erfassen kann. Somit ist es insbesondere möglich, das Echo einer Rohrleitung 803, und das Echo der Flüssigkeitsoberfläche 802, welche räumlich sehr nahe beieinanderliegen, zu trennen und somit die Messgenauigkeit zu erhöhen.

Figur 9 zeigt die sich ergebenden Veränderungen im Betriebsablauf bei der Aktivierung einer Benutzeroption für schlecht reflektierende Medien. Im Standardablauf geht die Steuersoftware innerhalb des Füllstandmessgerätes davon aus, dass die Reflexionseigenschaften des Mediums im üblichen Bereich des Medienspektrums liegen. Dementsprechend wird eine kurze Messzeit T1 eingestellt, welche sicherstellt, dass sehr viele Messungen eine schnelle Reaktionszeit des Gerätes bei sich veränderndem Füllstand bewirken können. Wird hingegen die Option für schlecht reflektierende Medien (beispielsweise bei Öl) aktiviert, so verändert das Messgerät seinen Betriebsablauf derart, dass sehr lange Messzeiten T2 eingestellt werden. Dies verringert zwar die Messwiederholrate, stellt jedoch sicher, dass Rauschanteile während der Erfassung der Messwerte sehr klein werden, was die Sicherheit der Messung bei ehedem kleinem Nutzsignal signifikant erhöht.

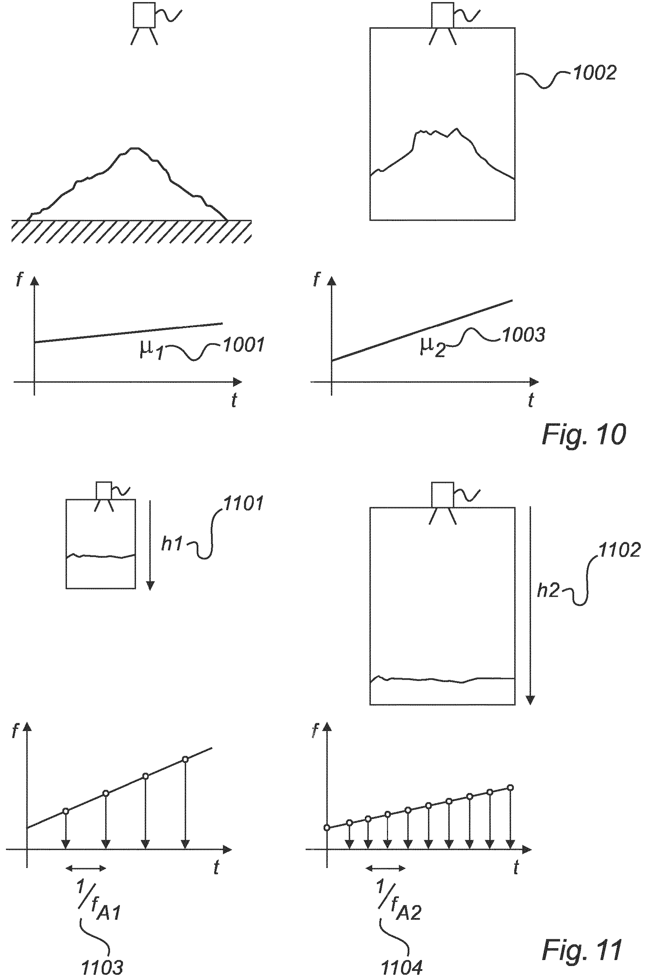

Figur 10 verdeutlicht einen eher rechtlichen Aspekt beim Betrieb von Füllstandmessgeräten. Abhängig von den Funkzulassungsnormen in unterschiedlichen Ländern existiert in einigen Bereichen die Vorgabe, dass Radarmessgeräte, welche außerhalb geschlossener Behälter betrieben werden, bestimmte Vorgaben in Bezug auf die Sweeprate einhalten müssen, um sicherzustellen, dass andere Kommunikationsgeräte nicht gestört werden. Ein Szenario ergibt sich aus der Benutzereingabe "Messung außerhalb eines Behälters". In diesem Fall verändert die Parameterverstelleinrichtung den Messablauf derart, dass eine maximal zulässige Sweeprate u1 1001 nicht überschritten wird. Bei einer Messung in einem geschlossenen Behälter 1002 kann diese Vorgabe ignoriert werden, weshalb in vorteilhafter Weise eine höherer Sweeprate u2 1003 eingestellt wird. Hierdurch kann die Messzeit reduziert und somit die Messwiederholrate in geschlossenen Behältern verbessert werden. Gleichzeitig werden die Vorgaben für einen Betrieb außerhalb geschlossener Behälter bei entsprechender Benutzereingabe von einem Füllstandradargerät eingehalten.

Figur 11 zeigt sich verändernde Betriebsabläufe bei der Eingabe der Höhe des zu messenden Behälters. Bei einem kleinen Behälter 1101 mit einer Höhe von h1 kann auf die Verarbeitung von Echos in einem Bereich weit ab der maximalen Entfernung h1 verzichtet werden. Die Parameterverstelleinrichtung nutzt den Zusammenhang, dass sich Echos in einer sehr großen Entfernung bei großen Frequenzen des Zwischenfrequenzsignals 108 abbilden, wohingegen Echos in einer kleineren Entfernung nur zu kleinen Frequenzen des Signals beitragen. Entsprechend kann im Beispiel einer kleinen Behälterhöhe 1101 die Verarbeitungskette aus Bandpassfilter 505, Verstärker 506 und A/D-Wandler 507 auf die kleinere Maximalfrequenz hin eingestellt werden. Dies ermöglicht insbesondere den Betrieb des A/D-Wandlers 507 mit einer kleinen Abtastfrequenz fA1 1103. Bedingt durch weniger erfasste Abtastwerte pro Messzyklus reduziert sich der Rechenaufwand innerhalb der digitalen Signalverarbeitung, was zu einer zeitlich kürzeren Messdauer und somit einer hohen Messwiederholrate beiträgt. Im Gegensatz hierzu muss bei großen Behältern 1102 mit hohen Frequenzanteilen für weit entfernt liegende Echos gerechnet werden. Die Verarbeitungskette aus Bandpassfilter 505, Verstärker 506 und A/D-Wandler 507 muss auf die größere Maximalfrequenz hineingestellt werden, und auch die Abtastfrequenz FA2 1104 muss entsprechend erhöht werden.

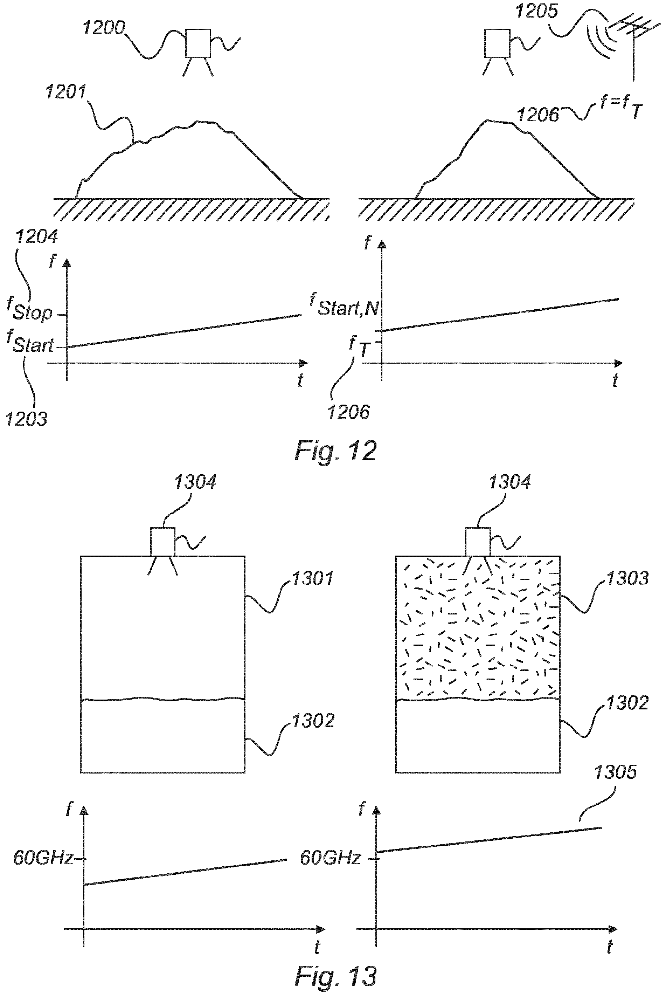

Figur 12 zeigt ein Ausführungsbeispiel, in welchem die Parameterverstelleinrichtung 501, 601 ohne die Vorgabe durch den Benutzer die charakteristischen Parameter zum Betrieb des Messgerätes selbständig optimiert. Das Messgerät möge zunächst im Freifeld eine Messung auf einen Schüttgutkegel 1201 durchführen. Die hierzu verwendeten Parameter, insbesondere die Startfrequenz fStart 1203 und die Stopfrequenz fStop 1204 werden ab Werk in die Firmware des Messgerätes einprogrammiert. Bedingt durch äußere Störungen, beispielsweise eine in der Nähe des Messgerätes montierte Sendeantenne 1205, kann der Fall eintreten, dass die Messung in zumindest einem Teilbereich der Bandbreite fStart ... fStop gestört wird. Das Messgerät kann durch Plausibilitätsanalysen und/oder durch ein Umschalten in einen reinen Empfangsmodus ermitteln, dass auf einer extern eingestrahlten Trägerfrequenz fT 1206 eine Messung nur schwer möglich ist. Die Parameterverstelleinrichtung, welche die Information über das Vorliegen einer Störung in einem Teilbereich des aktuell verwendeten Messbandes von der Controllerschaltung erhält, kann nun eigenständig die zur Messung verwendeten Frequenzen derart verändern, dass die externe Störfrequenz außerhalb des Bereichs der Messfrequenzen liegt. Im vorliegenden Beispiel erhöht die Parameterverstelleinrichtung die Startfrequenz auf einen Wert oberhalb der externen Störfrequenz, was zu einem störungsfreien Betrieb des Messgerätes führen kann. Ein weiteres Beispiel für eine automatische Optimierung der Betriebsparameter durch eine Parameterverstelleinrichtung wird in Figur 13 erläutert. Im Gegensatz zur Messung im Freifeld treten bei der Messung innerhalb geschlossener Behälter 1301 nur selten externe Störfrequenzen auf. Speziell bei der Vermessung von Ammoniak oder Wasser unter sehr hohem Druck und/oder sehr hoher Temperatur bildet sich oberhalb des eigentlichen Mediums 1302 eine gesättigte Dampfatmosphäre 1303 aus, welche die vom Messgerät 1304 abgestrahlten elektromagnetischen Wellen in zumindest einem Teilbereich der abgestrahlten Frequenzen massiv dämpft. So ist es beispielsweise bei Wasser bekannt, dass eine gesättigte Dampfatmosphäre elektromagnetische Wellen im Bereich um die 60 GHz massiv dämpft. Um den Verlust an Nutzsignal und somit einen Rückgang des Signal-Rausch-Verhältnisses in entsprechenden Anwendungen zu verhindern, kann die Parameterverstelleinrichtung immer dann, wenn es einen Rückgang der erfassten Signalenergie in einem Teilbereich der abgestrahlten Frequenzen erkennt, eine Verschiebung des zur Messung verwendeten Frequenzbandes vorsehen. Der Betriebsablauf gemäß der Darstellung 1305 verdeutlicht die Veränderung des Messablaufes beim Auftreten von Dämpfungseffekten bei einer Frequenz von 60 GHz.

Es kann auch vorgesehen sein, dass durch eine Eingabe von Betriebsdruck, Medium und Betriebstemperatur durch den Benutzer eine statische Veränderung der Betriebsfrequenzen des Radarmessgerätes durch die Parameterverstelleinrichtung vorgenommen wird.

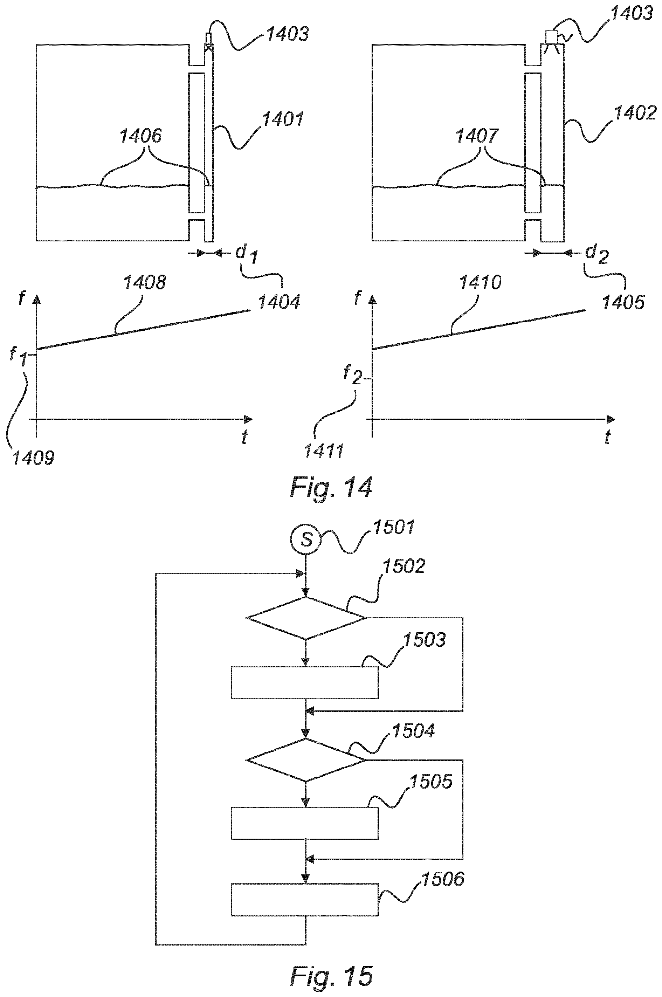

Figur 14 zeigt ein weiteres Anwendungsbeispiel. Speziell bei der Messung in sogenannten Bypass - Rohren 1401, 1402 mit freistrahlenden Radarmessgeräten 1403 tritt das Problem auf, dass das Bypass - Rohr als sogenannter Hohlleiter für die elektromagnetischen Signale agiert. Abhängig vom Innendurchmesser 1404, 1405 des Bypassrohres breiten sich elektromagnetische Wellen mit einer Frequenz unterhalb der Cutoff-Frequenz des Hohlleiters überhaupt nicht oder nur stark gedämpft in Richtung der Füllgutoberfläche 1406, 1407 aus. Nach Eingabe der Information über eine Messung im Standrohr und nach Eingabe des Durchmessers des Standrohres durch den Benutzer kann die Parameterverstelleinrichtung dieses Verhalten berücksichtigen, und somit den Messablauf optimieren. Unter Verwendung der Parameter für das Standrohr 1401 kann die Parameterverstelleinrichtung selbständig den Wert für die Cutoff - Frequenz f1 ermitteln. Um den Ablauf der Messung zu optimieren wird insbesondere die Startfrequenz der Messung 1408 auf einen Wert oberhalb der Cutoff-Frequenz f1 1409 des Standrohres 1401 festgesetzt. Bei einem anderen Rohrdurchmesser 1405 eines zweiten Standrohres 1402 ergibt sich eine im Vergleich zum vorigen Beispiel niedrigere Cutoff-Frequenz f2 1411, was dazu führt, dass die Parameterverstelleinrichtung einen Messablauf 1410 mit einer niedrigeren Startfrequenz, welche aber wiederum oberhalb der zweiten Cutoff-Frequenz f2 liegt, ansteuert.

Figur 15 zeigt einen Betriebsablauf eines Messgerätes nach dem FMCW-Verfahren oder nach dem Reflektometerverfahren. Das Verfahren beginnt im Startzustand 1501. Im Schritt 1502 überprüft die Parameterverstelleinrichtung 501, 601 zunächst, ob neue Parameter vom Benutzer über eine Schnittstelle 502 eingegeben worden sind. Ist dies der Fall, so werden auf Basis der Benutzerparameter charakteristische Parameter zum Betrieb des Messgerätes ermittelt und an die Controllereinheit übermittelt. Im Schritt 1504 wird von der Parameterverstelleinrichtung überprüft, ob eine externe Störfrequenz oder ein ausgeprägtes Dämpfungsverhalten einzelner Frequenzen im aktuell zur Messung verwendeten Frequenzbereich vorliegt. Ist dies der Fall, so wird im Schritt 1505 eine Veränderung der anzusteuernden Messfrequenzen ermittelt und an die Controllereinheit übertragen. Im Schritt 1506 führt die Controllereinheit auf Basis der Vorgaben der Parameterverstelleinheit eine Messung durch und ermittelt den Abstand zum Füllgut. Der ermittelte Abstand wird nach außen hin bereitgestellt.

Zu den Blockschaltbildern und Prinzipzeichnungen ist allgemein anzumerken, dass sie auf die wesentlichen Komponenten reduziert sind und für die praktische Umsetzung notwendige Komponenten teilweise weggelassen oder vereinfacht dargestellt wurden, da sie dem Fachmann bekannt sind. Dies betrifft beispielsweise Filtermaßnahmen am Ausgang der Mischer, um nur die erwünschten Mischfrequenzen durchzulassen und unerwünschte Mischprodukte zu unterdrücken. Außerdem ist dem Fachmann geläufig, Signale bei Bedarf an verschiedenen Stellen der Signalkette zu verstärken, um den Signal-Rausch-Abstand zu erhöhen. Dies könnten beispielsweise Verstärker im Sendezweig oder im Empfangszweig vor dem Empfangsmischer sein. Außerdem wurde hier nur der für die unmittelbare Messtechnik wichtige Teil der Sensorschaltung dargestellt. Ein nach diesem Prinzip aufgebauter Füllstand-Radarsensor kann selbstverständlich weitere dem Fachmann bekannte Schaltungsteile enthalten.

Es sei darüber hinaus darauf hingewiesen, dass die zuvor vorgestellten Verfahren und Vorrichtungen sowohl für Füllstandmessgeräte nach dem kontinuierlich oder schrittweise modulierten FMCW-Verfahren als auch für Füllstand-Radarmessgeräte nach dem Reflektometerprinzip verwendet werden können. Es ist dem Fachmann offensichtlich, wie die entsprechenden Ausführungsbeispiele auch für andere Prinzipien genutzt werden können.

Es sei darüber hinaus auch darauf hingewiesen, dass die dargelegten Zusammenhänge der Ausführungsbeispiele nicht vollzählig sind. Es kann insbesondere angedacht sein, beim kontinuierlich oder schrittweise modulierten FMCW-Verfahren jegliche Veränderung der Sweepparameter von den Benutzereingaben abhängig zu machen. Es kann vorgesehen sein, von einer niedrigen Frequenz zu einer hohen Frequenz zu sweepen. Es kann vorgesehen sein, von einer hohen zu einer niedrigen Frequenz zu sweepen. Es kann auch vorgesehen sein, den Sweep unter Auslassung einzelner Frequenzen in mehrere Teilsweeps zu zerlegen. Speziell beim Füllstandmessgerät nach dem Reflektometerverfahren kann vorgesehen sein, die Menge an anzusteuernden Sendefrequenzen in einer beliebigen Reihenfolge zu durchlaufen, und die sich ergebenden Messwerte im Speicher durch Sortieren wieder in die korrekte Reihenfolge zu ordnen.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen.

Bezugszeichen in den Ansprüchen sind nicht als Einschränkungen anzusehen.

## Patentansprüche

1. Füllstandradargerät, aufweisend:
eine Signalquellenanordnung (102, 301), eingerichtet zum Erzeugen eines elektromagnetischen Dauerstrich-Sendesignals (103, 103'), dessen Dauer größer ist als die doppelte Laufzeit des Sendesignals von der Signalquellenanordnung zum Füllgut;
eine Betriebsparameter-Bestimmungseinrichtung (501, 601), eingerichtet zum Bestimmen eines neuen Sweep-Parameters des Dauerstrich-Sendesignals unter Berücksichtigung einer Benutzereingabe oder von vom Füllstandradargerät erfassten Informationen,
**dadurch gekennzeichnet, dass** die Benutzereingabe oder die vom Füllstandradargerät erfassten Informationen Informationen hinsichtlich einer Klassifizierung des Füllgutes, einer Klassifizierung des Messaufbaus oder einer zu erwartenden Änderungsrate des Füllstands umfasst;
wobei, wenn die Benutzereingabe Informationen enthält, dass das Füllgut ein Schüttgutmaterial enthält, der neue Sweep-Parameter eine kleine Messbandbreite ist;
wobei, wenn die Benutzereingabe Informationen enthält, dass das Füllgut eine Flüssigkeit enthält, der neue Sweep-Parameter eine große Messbandbreite ist;
wobei, wenn die Benutzereingabe Informationen enthält, dass das Füllgut ein schlecht reflektierendes Medium enthält, der neue Sweep-Parameter eine lange Messzeit ist;
eine Betriebsparameter-Verstelleinrichtung (501, 601), eingerichtet zum Verändern des Sweep-Parameters des Dauerstrich-Sendesignals auf den neuen Sweep-Parameter während des Messbetriebs.

2. Füllstandradargerät nach Anspruch 1,
wobei es sich bei der Benutzereingabe oder den vom Füllstandradargerät erfassten Informationen um eine Kenngröße der Messumgebung oder des Messablaufs handelt.

3. Füllstandradargerät nach einem der vorhergehenden Ansprüche,
wobei der Sweep-Parameter des Dauerstrich-Sendesignals die Sweepzeit des Dauerstrich-Sendesignals, dessen Bandbreite, dessen Startfrequenz, dessen Stopfrequenz oder die Abtastrate eines Analog-Digital-Wandlers (111, 314, 507) ist.

4. Füllstandradargerät nach einem der Ansprüche 1 oder 2,
wobei der Sweep-Parameter des Dauerstrich-Sendesignals die Anzahl an Frequenzzwischenschritten des Dauerstrich-Sendesignals oder die pro Frequenzschritt zu erfassende Anzahl an Abtastwerten ist.

5. Füllstandradargerät nach einem der vorhergehenden Ansprüche,
wobei der Sweep-Parameter des Dauerstrich-Sendesignals die Leistung des Dauerstrich-Sendesignals in Abhängigkeit von der Frequenz des Dauerstrich-Sendesignals ist.

6. Füllstandradargerät nach einem der vorhergehenden Ansprüche, weiter aufweisend:
eine Sende- und Empfangsschaltung (318), eingerichtet zum:
Aussenden des Dauerstrich-Sendesignals in Richtung einer Füllgutoberfläche;
Empfangen des an der Füllgutoberfläche reflektierten Sendesignals und Mischen des empfangenen reflektierten Dauerstrich-Sendesignals mit einem weiteren Signal zur Bildung eines reflexionsabhängigen Empfangssignals (108, 108'), aus welchem sich der Füllstand bestimmen lässt.

7. Füllstandradargerät nach einem der vorhergehenden Ansprüche,
wobei das Dauerstrich-Sendesignal (103, 103') eine abschnittsweise konstante Frequenz aufweist;
wobei die einzelnen Frequenzen innerhalb eines definierten Frequenzbandes verteilt sind.

8. Verfahren zur Füllstandbestimmung, aufweisend die folgenden Schritte:
Erzeugen eines elektromagnetischen Dauerstrich-Sendesignals (103, 103'), dessen Dauer größer ist als die doppelte Laufzeit des Sendesignals von der Signalquellenanordnung zum Füllgut;
Bestimmen eines neuen Sweep-Parameters des Dauerstrich-Sendesignals unter Berücksichtigung einer Benutzereingabe oder von vom Füllstandradargerät erfassten Informationen;
wobei die Benutzereingabe oder die vom Füllstandradargerät erfassten Informationen Informationen hinsichtlich einer Klassifizierung des Füllgutes, einer Klassifizierung des Messaufbaus oder einer zu erwartenden Änderungsrate des Füllstands umfasst;
wobei, wenn die Benutzereingabe Informationen enthält, dass das Füllgut ein schlecht reflektierendes Schüttgutmaterial enthält, der neue Sweep-Parameter eine kleine Messbandbreite ist;
wobei, wenn die Benutzereingabe Informationen enthält, dass das Füllgut eine Flüssigkeit enthält, der neue Sweep-Parameter eine große Messbandbreite ist;
wobei, wenn die Benutzereingabe Informationen enthält, dass das Füllgut ein schlecht reflektierendes Medium enthält, der neue Sweep-Parameter eine lange Messzeit ist;
Verändern des Sweep-Parameters des Dauerstrich-Sendesignals auf den neuen Sweep-Parameter während des Messbetriebs.

9. Programmelement, das, wenn es auf einem Prozessor (16) eines Füllstandradargeräts ausgeführt wird, das Füllstandradargerät veranlasst, die Schritte nach Anspruch 8 durchzuführen.

10. Computerlesbares Medium, auf dem ein Programmelement nach Anspruch 9 gespeichert ist.

## Claims

1. Level radar device, compromising:
a signal source arrangement (102, 301), configured to generate a continuous-wave electromagnetic transmission signal (103, 103'), whose duration is greater than twice the propagation time of the transmission signal from the signal source arrangement to the fill material;
an operating-parameter determination unit (501,601), configured to determine a new sweep-parameter of the continuous-wave transmission signal, taking into account a user input or information recorded by the level radar device, **characterized in that** the user input or the information recorded by the level radar device contain information regarding a classification of the fill material, a classification of the measurement setup or the expected rate of change of the fill level;
wherein, if the user input contains information, that the fill material contains bulk material, the new sweep-parameter is a small measurement bandwidth;
wherein, if the user input contains information, that the fill material contains a liquid, the new sweep-parameter is a large measurement bandwidth;
wherein, if the user input contains information, that the fill material contains a poorly reflective medium, the new sweep-parameter is a long measurement time;
an operating-parameter adjustment device (501, 601), configured to change the sweep-parameter of the continuous-wave transmission signal to the new sweep-parameter during the measurement operation.

2. Level radar device according to claim 1,
wherein the user input or the information recorded by the level radar device relates to a characteristic parameter of the measurement environment or of the measurement process.

3. Level radar device according to one of the preceding claims,
wherein the sweep-parameter of the continuous-wave transmission signal is the sweep time of the continuous-wave transmission signal, its bandwidth, its start frequency, its stop frequency or the sampling rate of an analog-to-digital converter (111, 314, 507).

4. Level radar device according to claim 1 or claim 2,
wherein the sweep-parameter of the continuous-wave transmission signal is the number of intermediate frequency steps of the continuous-wave transmission signal or the number of samples to be acquired per frequency step.

5. Level radar device according to one of the preceding claims,
wherein the sweep-parameter of the continuous-wave transmission signal is the power of the continuous-wave transmission signal dependant on the frequency of the continuous-wave transmission signal.

6. Level radar device according to one of the preceding claims, further compromising:
a transmit- and receive-circuit (318), configured to:
transmit the continuous-wave transmission signal toward the surface of the fill material;
receive the transmission signal reflected from the fill-material surface and mix the received reflected continuous-wave transmission signal with a further signal to form a reflection-dependent receiving signal (108, 108'), from which the fill level can be determined.

7. Level radar device according to one of the preceding claims,
wherein the continuous-wave transmission signal (103, 103'), has a piecewise constant frequency;
wherein the individual frequencies are distributed within a defined frequency band.

8. Method for determining a fill-level, compromising the following steps:
generating an electromagnetic continuous-wave transmission signal (103,103'), whose duration is greater than twice the propagation time of the transmission signal from the signal source arrangement to the fill material;
determining a new sweep-parameter of the continuous-wave transmission signal, taking into account a user input or information recorded by the level-radar-device;
wherein the user input or the information recorded by the level-radar-device contain information regarding a classification of the fill material, a classification of the measurement setup or the expected rate of change of the fill level;
wherein, if the user input contains Information, that the fill material contains a poorly reflective bulk material, the new sweep-parameter is a small measurement-bandwidth;
wherein, if the user input contains information, that the fill material contains a liquid, the new sweep-parameter is a large measurement bandwidth;
wherein, if the user input contains information, that the fill material contains a poorly reflective medium, the new sweep-parameter is a long measurement time;
changing the sweep-parameter of the continuous-wave transmission signal to the new sweep-parameter during the measurement operation.

9. Program element which, when executed on a processor (16) of a level-radar-device, causes the level radar device to carry out the steps according to claim 8.

10. Computer-readable medium on which a program element according to claim 9 is stored

## Revendications

1. Appareil radar de niveau de remplissage, présentant :
un agencement source de signal (102, 301) conçu pour générer un signal d'émission électromagnétique à onde continue (103, 103') dont la durée est supérieure au double du temps de propagation du signal d'émission entre l'agencement source de signal et le produit de remplissage ;
un dispositif de détermination de paramètres de fonctionnement (501, 601), conçu pour déterminer un nouveau paramètre de balayage du signal d'émission à onde continue en tenant compte d'une entrée utilisateur ou d'informations acquises par l'appareil radar de niveau de remplissage,
**caractérisé en ce que** l'entrée utilisateur ou les informations acquises par l'appareil radar de niveau de remplissage comprennent des informations concernant une classification du produit de remplissage, une classification du montage de mesure ou un taux de variation attendu du niveau de remplissage ;
dans lequel, si l'entrée utilisateur contient des informations indiquant que le produit de remplissage contient une matière en vrac, le nouveau paramètre de balayage est une petite largeur de bande de mesure ;
dans lequel, si l'entrée utilisateur contient des informations indiquant que le produit de remplissage contient un liquide, le nouveau paramètre de balayage est une grande largeur de bande de mesure ;
dans lequel, si l'entrée utilisateur contient des informations indiquant que le produit de remplissage contient un milieu peu réfléchissant, le nouveau paramètre de balayage est un temps de mesure long ;
un dispositif de réglage de paramètres de fonctionnement (501, 601) conçu pour modifier le paramètre de balayage du signal d'émission à onde continue en le remplaçant par le nouveau paramètre de balayage pendant la mesure.

2. Appareil radar de niveau de remplissage selon la revendication 1,
dans lequel l'entrée utilisateur ou les informations acquises par l'appareil radar de niveau de remplissage sont une caractéristique de l'environnement de mesure ou du processus de mesure.

3. Appareil radar de niveau de remplissage selon l'une des revendications précédentes,
dans lequel le paramètre de balayage du signal d'émission à onde continue est le temps de balayage du signal d'émission à onde continue, sa largeur de bande, sa fréquence de départ, sa fréquence d'arrêt ou la fréquence d'échantillonnage d'un convertisseur analogique-numérique (111, 314, 507).

4. Appareil radar de niveau de remplissage selon l'une des revendications 1 ou 2,
dans lequel le paramètre de balayage du signal d'émission à onde continue est le nombre de pas de fréquence intermédiaires du signal d'émission à onde continue ou le nombre de valeurs d'échantillonnage à acquérir par pas de fréquence.

5. Appareil radar de niveau de remplissage selon l'une des revendications précédentes,
dans lequel le paramètre de balayage du signal d'émission à onde continue est la puissance du signal d'émission à onde continue en fonction de la fréquence du signal d'émission à onde continue.

6. Appareil radar de niveau de remplissage selon l'une des revendications précédentes, présentant en outre :
un circuit d'émission et de réception (318) conçu pour :
émettre le signal d'émission à onde continue en direction d'une surface de produit de remplissage ;
recevoir le signal d'émission réfléchi par la surface de produit de remplissage et mélanger le signal d'émission à onde continue réfléchi reçu avec un autre signal pour former un signal de réception dépendant de la réflexion (108, 108'), à partir duquel le niveau de remplissage peut être déterminé.

7. Appareil radar de niveau de remplissage selon l'une des revendications précédentes,
dans lequel le signal d'émission à onde continue (103, 103') présente une fréquence constante par parties ;
dans lequel les différentes fréquences sont réparties dans une bande de fréquences définie.

8. Procédé de détermination de niveau de remplissage, comprenant les étapes suivantes :
génération d'un signal d'émission électromagnétique à onde continue (103, 103') dont la durée est supérieure au double du temps de propagation du signal d'émission entre l'agencement source de signal et le produit de remplissage ;
détermination d'un nouveau paramètre de balayage du signal d'émission à onde continue en tenant compte d'une entrée utilisateur ou d'informations acquises par l'appareil radar de niveau de remplissage ;
dans lequel l'entrée utilisateur ou les informations acquises par l'appareil radar de niveau de remplissage comprennent des informations concernant une classification du produit de remplissage, une classification du montage de mesure ou un taux de variation attendu du niveau de remplissage ;
dans lequel, si l'entrée utilisateur contient des informations indiquant que le produit de remplissage contient une matière en vrac peu réfléchissante, le nouveau paramètre de balayage est une petite largeur de bande de mesure ;
dans lequel, si l'entrée utilisateur contient des informations indiquant que le produit de remplissage contient un liquide, le nouveau paramètre de balayage est une grande largeur de bande de mesure ;
dans lequel, si l'entrée utilisateur contient des informations indiquant que le produit de remplissage contient un milieu peu réfléchissant, le nouveau paramètre de balayage est un temps de mesure long ;
modification du paramètre de balayage du signal d'émission à onde continue en le remplaçant par le nouveau paramètre de balayage pendant la mesure.

9. Élément de programme qui, lorsqu'il est exécuté sur un processeur (16) d'un appareil radar de niveau de remplissage, amène l'appareil radar de niveau de remplissage à mettre en œuvre les étapes selon la revendication 8.

10. Support lisible par ordinateur sur lequel est stocké un élément de programme selon la revendication 9.
